# DEMANDE DE BREVET EUROPEEN

(11) **EP 3 998 618 A1**
(43) Date de publication de la demande: **18.05.2022**
(21) Numéro de dépôt: 21202382.4
(22) Date de dépôt: 13.10.2021
(51) Int. Cl.: H01H 3/26, H01H 3/40, H01H 31/02

(54) **ENSEMBLE MOTORÉDUCTEUR DE COMMANDE D'APPAREIL DE COUPURE À ÉLÉMENT DE SÉCURITÉ RETIRABLE**

(30) Priorité: 10.11.2020 FR 2011530
(71) Demandeur: Schneider Electric Industries SAS, 92500 Rueil-Malmaison (FR)
(72) Inventeur: EPAILLY, Philippe, 38450 VIF (FR); FRIBOURG, Guillaume, 38000 Grenoble (FR)
(74) Mandataire: Schneider Electric

(57) **Abrégé**

Ensemble motoréducteur (2) comprenant un moteur (4) et un réducteur (6), le réducteur (6) comportant une entrée (12), une sortie (14), une chaîne cinématique avec un entraîneur (18) et un actionneur (20) pour manœuvrer l'entraîneur (18), un support (16a, 16b) auquel l'actionneur (20) est lié, et un élément de sécurité (22) dont fait partie l'entraîneur (18) et qui est retirable de la chaîne cinématique, l'élément de sécurité (22) pouvant être amené d'un état enfiché, dans lequel il est intégré dans la chaîne cinématique, à un état retiré, dans lequel la chaîne cinématique est interrompue.

Lorsque l'élément de sécurité (22) est enfiché, son entraîneur (18) est en prise avec l'actionneur (20) lié au support (16a, 16b), et, lorsque l'élément de sécurité (22) est retiré, son entraîneur (18) est séparé de l'actionneur (20) lié au support.

## Description

### Domaine technique

La présente divulgation concerne un ensemble motoréducteur pour la commutation motorisée d'un appareil de coupure d'un appareillage électrique moyenne ou haute tension, l'ensemble motoréducteur comprenant un moteur et un réducteur en prise avec le moteur, le réducteur comportant les éléments suivants :
- une entrée apte à recevoir une première force d'entraînement du moteur;
- une sortie apte à délivrer une deuxième force d'entraînement à un dispositif de commutation d'appareil de coupure ;
- une chaîne cinématique, reliant l'entrée à la sortie et apte à convertir la première force d'entraînement en la deuxième force d'entraînement, la chaîne cinématique comprenant les éléments suivants, situés à la sortie du réducteur :
   - un entraîneur apte à se déplacer entre une position fermée et une position ouverte pour ainsi entraîner le dispositif de commutation ; et
   - un actionneur pour manœuvrer l'entraîneur entre ses positions fermée et ouverte ;
- un support portant la chaîne cinématique, l'actionneur étant lié au support ; et
- un élément de sécurité dont fait partie l'entraîneur et qui est retirable de la chaîne cinématique, l'élément de sécurité pouvant être amené d'un état enfiché, dans lequel il est intégré dans la chaîne cinématique, à un état retiré, dans lequel la chaîne cinématique est interrompue.

### Technique antérieure

Un tel ensemble motoréducteur est connu du document FR 2 904 470 A1. Dans les figures de ce document, l'ensemble motoréducteur est identifié par la référence 49.

Dans cette solution connue, en retirant l'élément de sécurité 50, c'est-à-dire le pignon manivelle, du motoréducteur 49, un opérateur peut se protéger de manière efficace de toute commutation motorisée intempestive d'interrupteur avant qu'il entame une opération de maintenance sur l'appareillage électrique associé au motoréducteur 49.

Toutefois, il s'avère que l'enlèvement et le replacement du pignon manivelle 50 nécessite une certaine adresse. En outre, le pignon manivelle 50 souffre, en position enfichée, d'une tenue mécanique insuffisante.

### Résumé

Ainsi, le but de la présente divulgation est d'améliorer l'ensemble motoréducteur connu du document FR 2 904 470 A1, et notamment de faciliter la mise en place de l'élément de sécurité, et d'assurer une bonne tenue mécanique de tous les composants de la chaîne cinématique.

Selon la présente divulgation, ce but est atteint avec un ensemble motoréducteur tel que défini au § [0001] qui est caractérisé en ce que, lorsque l'élément de sécurité est enfiché, son entraîneur est en prise avec l'actionneur lié au support, et en ce que, lorsque l'élément de sécurité est retiré, son entraîneur est séparé de l'actionneur lié au support.

Selon la présente divulgation, l'actionneur est donc dissocié de l'entraîneur et de l'élément de sécurité. L'actionneur ne fait plus partie de l'élément de sécurité. Il est maintenant lié de manière permanente au support du réducteur. Grâce à cette liaison durable, la tenue mécanique de l'actionneur est améliorée. Par ailleurs, puisque l'élément de sécurité retirable n'a plus qu'un entraîneur qu'il suffit de craboter et d'insérer dans une lumière appropriée, la mise en place est facilitée.

Les caractéristiques exposées dans les paragraphes suivants peuvent, optionnellement, être mises en œuvre. Elles peuvent être mises en œuvre indépendamment les unes des autres ou en combinaison les unes avec les autres :
- l'actionneur est une roue dentée, de préférence munie d'un secteur denté ;
- l'entraîneur se présente sous la forme d'une manivelle, de préférence avec un ergot excentré relié à un moyeu central ;
- l'entraîneur et l'actionneur sont chacun munis d'éléments de liaison complémentaires permettant leur mise en prise ;
- le support comprend un axe sur lequel est monté l'actionneur de manière rotative ;
- l'entraîneur est monté sur l'axe du support, en prise avec l'actionneur, lorsque l'élément de sécurité est enfiché ;
- le support est un boîtier accueillant la chaîne cinématique ;
- le support est muni d'un tenon de raccordement de l'ensemble motoréducteur à un dispositif de commutation d'appareil de coupure ;
- le tenon de raccordement se situe dans le prolongement de l'axe ;
- le support est muni d'un trou de raccordement de l'ensemble motoréducteur à un dispositif de commutation d'appareil de coupure ;
- le trou de raccordement est aménagé au sein de l'axe ;
- l'actionneur est une pièce réalisée par fabrication additive ou par pressage et frittage.

La présente divulgation a également trait à un ensemble électromécanique comprenant un appareil de coupure, un dispositif de commutation de l'appareil de coupure, et un ensemble motoréducteur pour l'actionnement du dispositif de commutation, l'ensemble motoréducteur étant un ensemble tel que défini ci-dessus.

Dans la présente divulgation, les termes « moyenne tension » et « haute tension » sont utilisés dans leur acceptation habituelle, à savoir que le terme « moyenne tension » désigne une tension qui est supérieure à 1 000 volts en courant alternatif et à 1 500 volts en courant continu mais qui ne dépasse pas 52 000 volts en courant alternatif et 75 000 volts en courant continu, tandis que le terme « haute tension » désigne une tension qui est strictement supérieure à 52 000 volts en courant alternatif et à 75 000 volts en courant continu.

### Brève description des dessins

D'autres caractéristiques, détails et avantages apparaîtront à la lecture de la description détaillée ci-après, et à l'analyse des dessins annexés, sur lesquels :

### Fig. 1

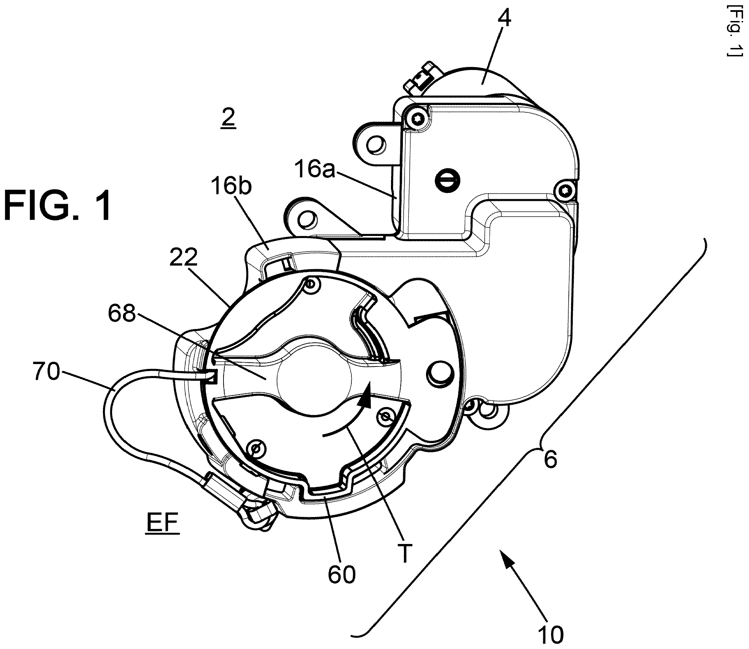

[Fig. 1] est une vue avant, en perspective, d'un motoréducteur selon la présente divulgation.

### Fig. 2

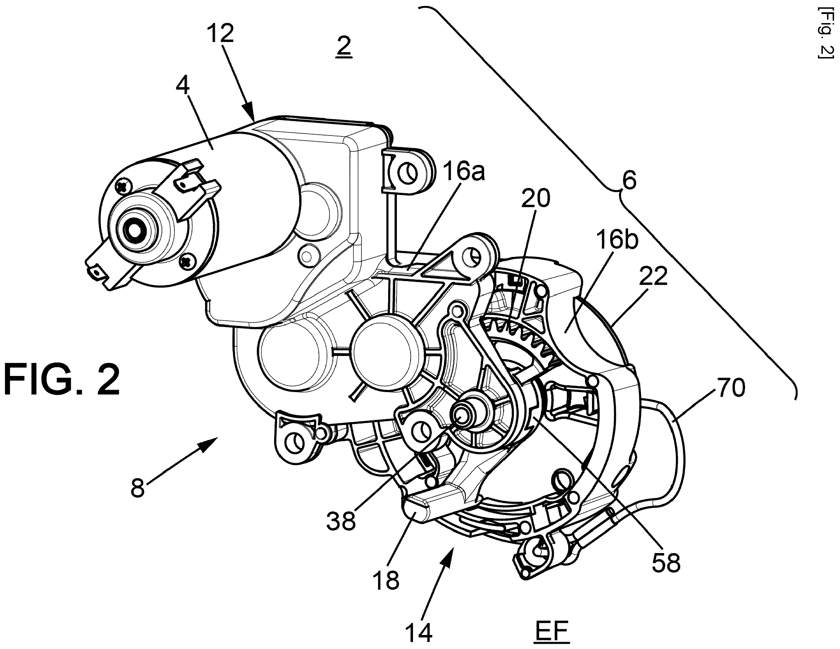

[Fig. 2] est une vue arrière, en perspective, du motoréducteur de la figure 1.
**Fig.3**

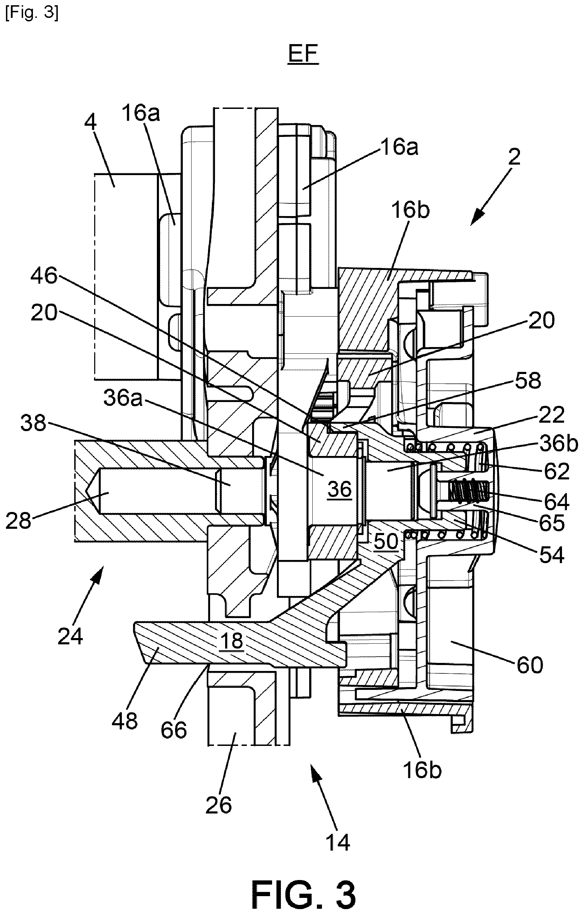

   [Fig. 3] est une vue, partiellement en coupe, du motoréducteur des figures 1 et 2 dans un état monté sur un dispositif de commutation.
**Fig. 4**

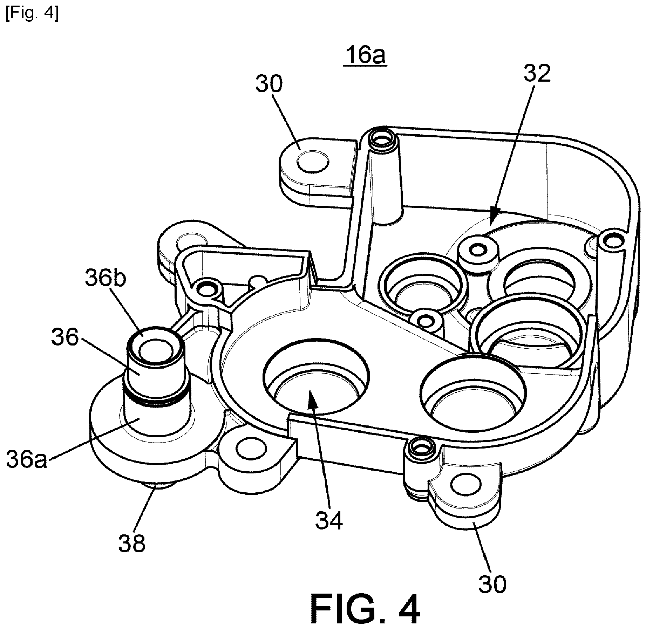

   [Fig. 4] est une vue en perspective de la partie inférieure du boîtier de réducteur du motoréducteur des figures 1 et 2.
**Fig. 5**

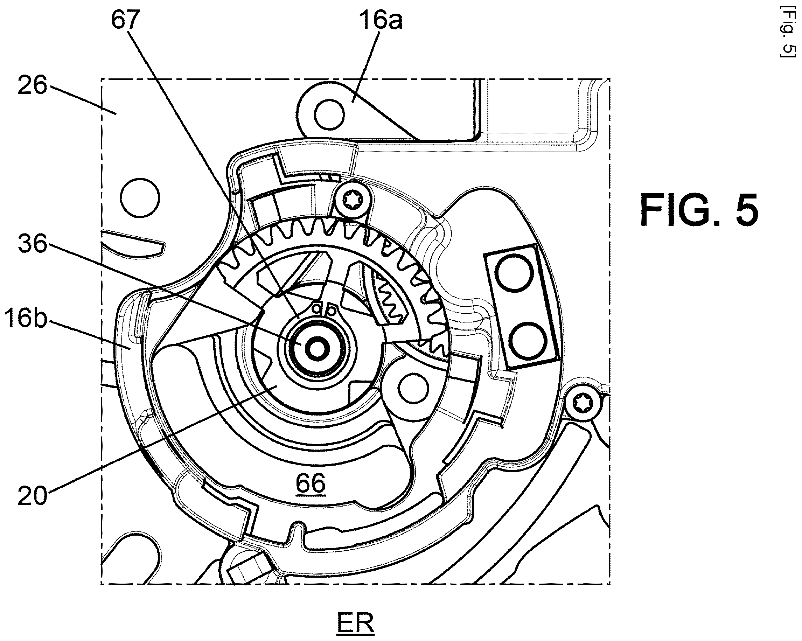

   [Fig. 5] est une vue de détail du motoréducteur des figures 1 et 2, avec l'élément de sécurité retiré.
**Fig. 6**

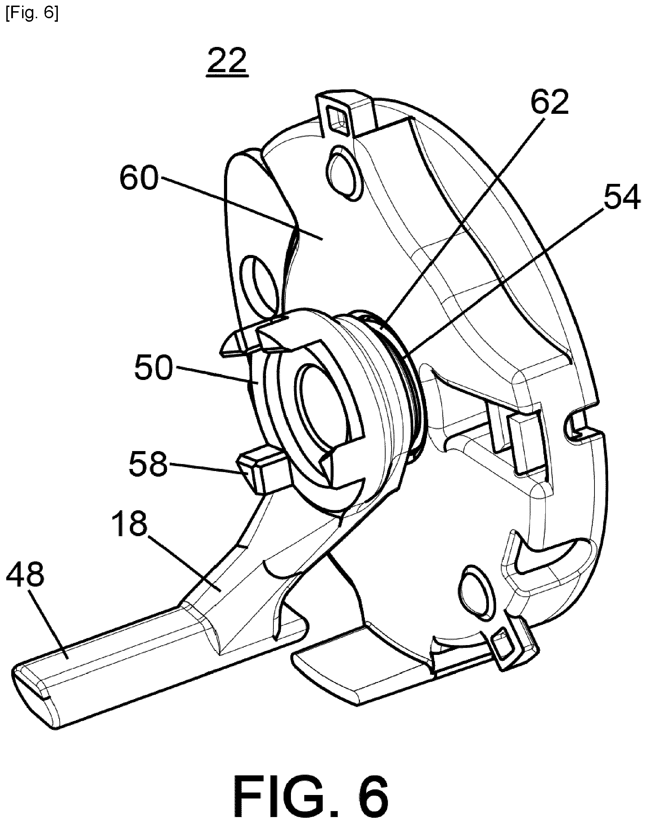

   [Fig. 6] est une vue en perspective de l'élément de sécurité du motoréducteur des figures 1 et 2.
**Fig. 7**

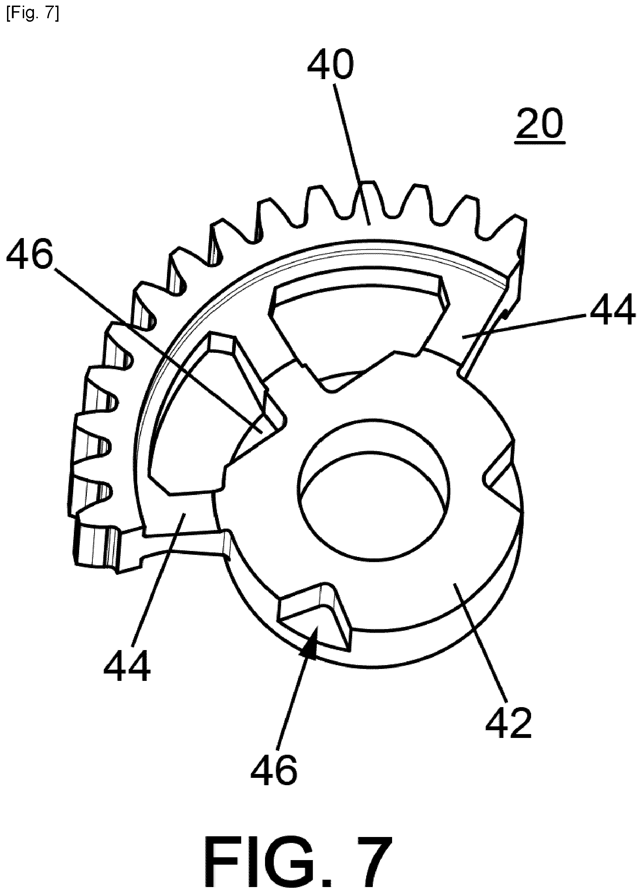

   [Fig. 7] est une vue en perspective de la roue dentée formant l'actionneur du motoréducteur des figures 1 et 2.
**Fig. 8**

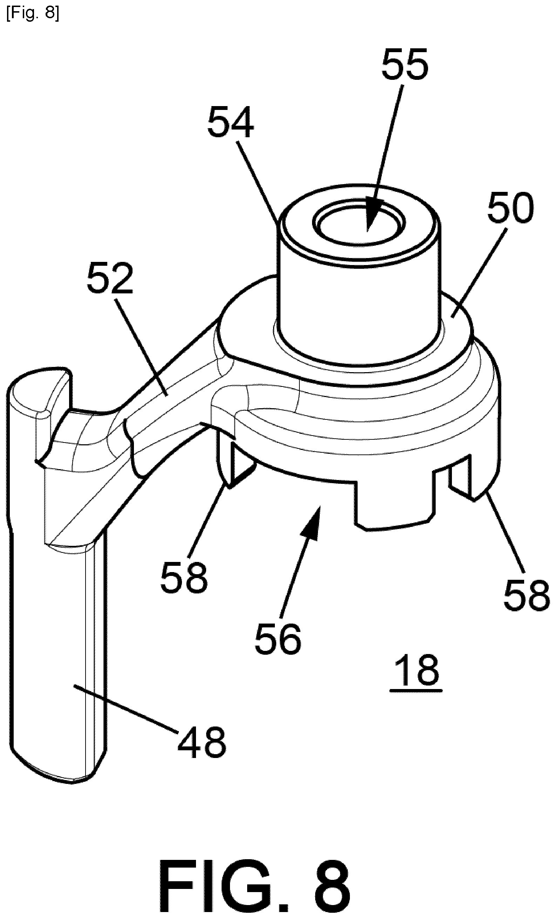

   [Fig. 8] est une vue en perspective de l'entraîneur du motoréducteur des figures 1 et 2.
**Fig. 9**

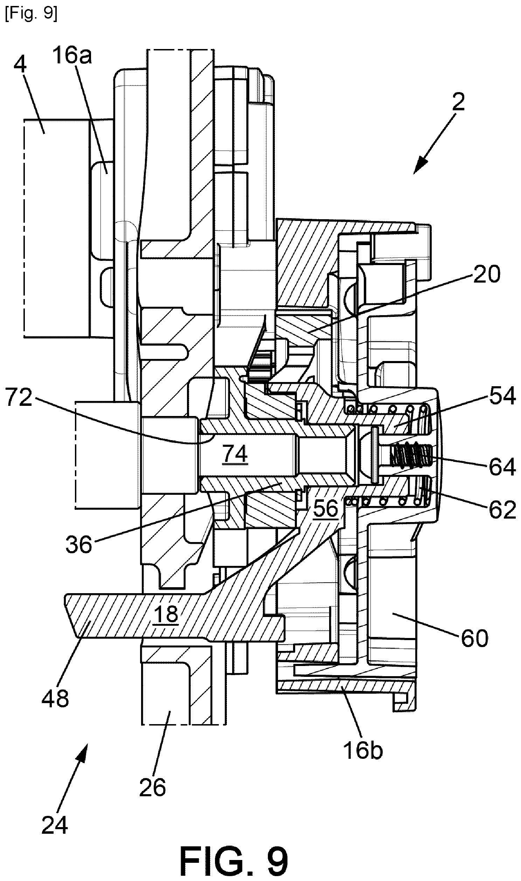

   [Fig. 9] est une vue, partiellement en coupe, d'une variante du motoréducteur dans un état monté sur un dispositif de commutation.

### Description des modes de réalisation

Les figures 1 et 2 montrent un ensemble motoréducteur 2 selon la présente divulgation, une fois vu de l'avant (figure 1), et une fois vu de l'arrière (figure 2).

L'ensemble motoréducteur 2 sert à la commutation motorisée d'un appareil de coupure d'un appareillage électrique moyenne ou haute tension. Typiquement, l'ensemble motoréducteur 2 est monté sur une cellule d'un tableau ou appareillage électrique haute ou moyenne tension. Grâce à l'ensemble motoréducteur 2, un appareil de coupure de la cellule, tel qu'un interrupteur, un interrupteur-fusible, un sectionneur ou un disjoncteur, peut être commuté à distance. Il n'est donc plus nécessaire qu'un opérateur soit sur place pour effectuer la commutation.

Plus précisément, l'ensemble motoréducteur 2 est en général monté sur un dispositif de commutation d'appareil de coupure qui est lui-même monté sur la cellule moyenne ou haute tension. Le dispositif de commutation porté par la cellule héberge un mécanisme de commande d'appareil de coupure, par exemple à tumbler et ressort. Dans cette configuration, l'ensemble motoréducteur 2 actionne le mécanisme de commande qui, à son tour, commande l'appareil de coupure de la cellule moyenne ou haute tension.

L'ensemble motoréducteur 2 comprend un moteur 4 et un réducteur 6 en prise avec le moteur 4. Le réducteur 6 dispose d'une face avant 10, visible à la figure 1, et d'une face arrière 8, visible à la figure 2. On entend par face avant 10 du réducteur 6 la face accessible à un opérateur lorsque l'ensemble motoréducteur 2 est monté sur un appareillage électrique. La face arrière 8 est la face du réducteur 6 située à l'opposé de la face avant 10.

De préférence, le moteur 4 est un moteur électrique. Il peut s'agir d'un moteur électrique à courant continu ou universel. Le moteur électrique 4 est monté de façon frontale sur la face arrière 8 du réducteur 6, cf. la figure 2.

Dans l'exemple illustré, le moteur électrique 4 se situe à une extrémité amont du réducteur 6. Le moteur électrique 4 dispose d'un arbre d'entraînement (non représenté) qui est inséré dans une entrée 12 du réducteur 6 pour délivrer une première force d'entraînement au réducteur 6.

Le réducteur dispose également d'une sortie 14 qui se situe à une extrémité avale à l'opposé de l'entrée 12. La sortie 14 est apte à délivrer une deuxième force d'entraînement à un dispositif de commutation lorsque l'ensemble motoréducteur 2 est à l'état monté.

Le volume du réducteur 6 est délimité par un boîtier qui comprend une partie inférieure 16a et une partie supérieure 16b. Les deux parties de boîtier 16a, 16b sont complémentaires. Elles sont rapportées l'une à l'autre. On notera que le moteur électrique 4 est ici monté sur la partie inférieure 16a du boîtier. Le boîtier 16a, 16b abrite une chaîne cinématique (largement occultée). La chaîne cinématique relie l'entrée 12 du réducteur 6 à sa sortie 14. La chaîne cinématique est apte à convertir la première force d'entraînement provenant du moteur électrique 4 en la deuxième force d'entraînement. Le boîtier 16a, 16b peut être qualifié de support qui porte la chaîne cinématique.

En référence à la figure 2, on distingue deux éléments de la chaîne cinématique, à savoir un entraîneur 18 et un actionneur 20. Ces deux éléments 18, 20 sont tous les deux situés à la sortie 14 du réducteur 6.

Le réducteur 6 comprend en outre un élément de sécurité retirable 22.

La figure 3 montre une configuration où l'ensemble motoréducteur 2 est monté sur un dispositif de commutation 24 représenté partiellement à la figure 3. La figure 3 est une vue, partiellement en coupe, de la sortie 14 du réducteur 6. La sortie 14 est montée sur une platine avant 26 du dispositif de commutation 24. Le dispositif de commutation 24 dispose également d'un alésage 28 de raccordement de l'ensemble motoréducteur 2.

On va maintenant d'abord décrire plus en détail la partie inférieure 16a du boîtier, l'élément de sécurité 22, l'entraîneur 18, ainsi que l'actionneur 20 avant de retourner à la figure 3.

La partie inférieure 16a du boîtier du réducteur 6 est montrée en perspective à la figure 4. Dans l'exemple illustré, la partie de boîtier 16a est d'un seul tenant. Le matériau utilisé est de préférence de l'aluminium. La partie de boîtier 16a dispose de plusieurs pattes de fixation 30. Ces pattes permettent de fixer l'ensemble motoréducteur 2 au dispositif de commutation 24. La pièce 16a dispose en outre de deux compartiments 32 et 34 d'accueil d'éléments de la chaîne cinématique. La partie de boîtier 16a est également pourvue d'un axe de support 36. La partie de boîtier 16a est aussi munie d'un tenon de raccordement et de centrage 38. Le tenon de raccordement 38 se situe ici dans le prolongement de l'axe de support 36.

En référence à la figure 7, l'actionneur 20 se présente sous la forme d'une roue dentée. La roue dentée 20 est ici munie d'un secteur denté 40. De préférence, la roue dentée 20 est réalisée d'une seule pièce. Le secteur denté 40 est relié à un corps central 42, qui a de préférence une forme annulaire. Le secteur denté 40 a des bras de support 44 qui assurent la liaison au corps central 42. Plusieurs éléments de liaison 46 sont aménagés dans le corps central 42. Les éléments de liaison 46 se présentent ici sous la forme d'évidements. La complexité de la pièce suggère des modalités de fabrication préférentielles telles que la fabrication additive, ou le pressage frittage.

En référence à la figure 8, l'entraîneur 18 est ici une manivelle comportant un ergot excentré 48 et un moyeu central 50 portant l'ergot 48. De préférence, l'entraîneur 18 est réalisée en une seule pièce. Le moyeu central 50 et l'ergot 48 sont reliés à l'aide d'un bras oblique 52. Le moyeu central 50 dispose d'une section de fixation 54 et d'une section 56 adjacente de réception d'axe de rotation. La section de fixation 54 est munie d'un logement 55 pour accueillir un élément de fixation telle qu'une vis. De préférence, la section de fixation 54 a une forme cylindrique. La section de réception 56 comprend un alésage. Le moyeu central 50 dispose en outre de plusieurs éléments de liaison 58. Il s'agit de préférence de crabots 58 qui s'élancent à partir du corps principal du moyeu central 50.

En référence à la figure 6, l'élément de sécurité 22 comprend l'entraîneur 18, un capot 60, ainsi qu'un élément 62 de sollicitation de l'entraîneur 18. L'élément de sollicitation 62 est enfilé sur la section de fixation 54 du moyeu 50 de l'entraîneur 18. L'élément de sollicitation 62 est de préférence un ressort. Le capot 60 est monté sur l'ensemble constitué par l'élément de sollicitation 62 et la section de fixation 54 du moyeu 50. En d'autres termes, l'élément de sollicitation 62 se situe entre, d'un côté, l'entraîneur 18 et, de l'autre côté, le capot 60. L'élément de sollicitation 62 s'appuie avec l'une de ses extrémités sur l'entraîneur 18 et avec son autre extrémité sur le capot 60. Afin d'accueillir l'élément de sollicitation 62 et la section de fixation 54 du moyeu 50, le capot 60 est pourvu d'un logement central.

En référence à la figure 3, l'ensemble de sécurité 22 comprend en outre un élément 64 de fixation de l'entraîneur 18 au capot 60. Il s'agit ici d'une vis autotaraudeuse 64 hébergée dans la section de fixation 54 du moyeu central 50. Cette vis autotaraudeuse 64 est vissée dans un trou 65 réalisé dans le logement central du capot 60.

La figure 3 illustre également l'assemblage du boîtier 16a,16b, de l'élément de sécurité 22, de la roue dentée 20, ainsi que de l'entraîneur 18. La roue dentée 20 et l'entraîneur 18 sont tous les deux montés de manière rotative sur l'axe 36 de la partie de boîtier inférieure 16a. Dans cette configuration, l'entraîneur 18 et la roue dentée 20 sont en prise. Ainsi, l'entraîneur 18 et la roue dentée 20 sont solidaires en rotation. Cela veut dire qu'une rotation de la roue dentée 20 autour de l'axe 36 engendre une même rotation de l'entraîneur 18 autour du même axe 36. On note que l'axe 36 dispose d'un premier tronçon 36a servant de support à la roue dentée 20, et d'un deuxième tronçon 36b servant de support à l'entraîneur 18. Le diamètre du deuxième tronçon 36b est inférieur au diamètre du premier tronçon 36a. La liaison de forme entre l'entraîneur 18 et la roue dentée 20 est assurée par les éléments de liaison complémentaire 46, 58. Le ressort 62 sollicite l'entraîneur 18 vers la roue dentée 20 et empêche ainsi toute désolidarisation intempestive entre la roue dentée 20 et l'entraîneur 18.

Dans la configuration montée de l'ensemble motoréducteur 2 selon la figure 3, l'ergot 48 de l'entraîneur 18 est inséré dans une lumière 66 de la platine 26 du dispositif de commutation 24. En effectuant un mouvement en arc de cercle à l'intérieur de la lumière 66, l'entraîneur est apte à se déplacer entre une position fermée et une position ouverte. De cette manière, l'entraîneur 18 entraîne avec lui une pièce de commutation du dispositif de commutation 24 non représentée, avec laquelle il coopère. Le déplacement de l'entraîneur 18 entre ses positions fermée et ouverte est déclenché en activant le moteur électrique 4. Celui-ci entraîne le réducteur 6, ce qui fait tourner la roue dentée 20 et par conséquent l'entraîneur 18. L'entraîneur 18 est ainsi manœuvré entre ses positions fermée et ouverte par l'intermédiaire de la roue dentée 20.

Le bon positionnement de l'ensemble motoréducteur 2 par rapport au dispositif de commutation 24 lors de son montage est assuré en insérant le tenon de raccordement 38 de l'ensemble motoréducteur 2 dans l'alésage 28 du dispositif de commutation 24. Le tenon de raccordement 38 et l'alésage 28 agissent donc ensemble comme moyen de centrage de l'ensemble motoréducteur 2 vis-à-vis du dispositif de commutation 24.

Selon la présente divulgation, l'élément de sécurité 22 est retirable de la chaîne cinématique. Plus précisément, l'élément de sécurité 22 peut être amené d'un état enfiché, dans lequel il est intégré dans la chaîne cinématique, à un état retiré, dans lequel la chaîne cinématique est interrompue. L'état enfiché EF est montré aux figures 1 à 3. L'état retiré ER est montré à la figure 5.

Lorsque l'élément de sécurité 22 est enfiché, son entraîneur 18 est en prise avec l'actionneur 20, c'est-à-dire avec la roue dentée, cf. les figures 2 et 3. Lorsque l'élément de sécurité 22 est retiré, cf. la figure 5, son entraîneur 18 est séparé de l'actionneur 20.

On notera en particulier que l'actionneur 20 (qui prend ici la forme d'une roue dentée) est lié de façon permanente au boîtier 16a, 16b du réducteur 6. Ainsi, un opérateur qui retire l'élément de sécurité 22, par exemple lors d'une opération de maintenance, enlève uniquement l'entraîneur 18 de la chaîne cinématique, tandis que la roue dentée 20 reste à sa place au sein de la chaîne cinématique.

De préférence, la roue dentée 20 est solidarisée à l'axe 36 à l'aide d'un anneau élastique 67, cf. la figure 5.

On comprend donc que, selon la présente divulgation, l'élément de sécurité amovible 22 comprend uniquement une seule pièce de la chaîne cinématique du réducteur 6. Dans l'exemple illustré, cette unique pièce est la pièce la plus en aval de la chaîne cinématique. Il s'agit ici de la manivelle 18. L'élément de sécurité amovible 22 est notamment dépourvu de pignon et/ou d'axe de rotation central saillant.

Afin de retirer l'élément de sécurité 22 du réducteur 6, il suffit de saisir le capot 60 par une prise 68 réalisée dans sa face externe, de faire tourner le capot 60 dans le sens trigonométrique T (cf. figure 1), puis de tirer. Dès qu'il a retiré l'élément de sécurité 22, l'opérateur peut alors tout simplement le relâcher. En effet, dans le mode de réalisation illustré, un câble de maintien 70 raccordant la partie supérieure de boîtier 16b au capot 60 empêche l'élément de sécurité 22 de tomber à terre. Grâce au câble 70, à l'état retiré, l'élément de sécurité 22 reste accroché au boîtier 16a, 16b et ne peut être égaré.

La figure 9 montre une variante de réalisation de l'ensemble motoréducteur 2 selon la présente divulgation. La plupart des éléments de cette variante sont identiques au mode de réalisation décrit précédemment. On insiste ici uniquement sur les différences.

Dans cette variante, la partie inférieure de boîtier 16a est munie d'un trou 72 de raccordement de l'ensemble motoréducteur 2 au dispositif de commutation. 24. Le trou de raccordement 72 est notamment aménagé au sein de l'axe 36. Le dispositif de commutation 24 est alors muni d'un tenon de centrage 74 qui vient s'insérer dans le trou de raccordement 72 lors du montage de l'ensemble motoréducteur 2 sur le dispositif de commutation 24.

Dans les deux variantes décrites dans la présente demande (cf. les figures 3 et 9), l'ajustement de la position de l'ensemble motoréducteur 2 par rapport au dispositif de commutation 24 est assuré par une liaison mâle-femelle. Dans la première variante selon la figure 3, l'élément mâle 38 fait partie de l'ensemble motoréducteur 2, et l'élément femelle 28 fait partie du dispositif de commutation 24. Dans la seconde variante de la figure 9, l'élément mâle 74 fait partie du dispositif de commutation 24, et l'élément femelle 72 fait partie de l'ensemble motoréducteur 2.

L'ensemble motoréducteur selon la présente divulgation présente notamment les avantages suivants :
- L'enlèvement et la mise en place de l'élément de sécurité 22 sont aisés. En effet, puisque dans sa partie intégrée à la chaîne cinématique l'élément de sécurité 22 comprend uniquement une manivelle 18 à crabots 58, il s'enfiche facilement ;
- Le dernier pignon du réducteur 6 (à savoir la roue dentée 20) a une bonne tenue mécanique. En effet, la roue dentée 20 est liée de façon permanente au boîtier 16 du réducteur, ce qui est plus fiable qu'une liaison qui a vocation à être interrompue régulièrement ;
- L'ensemble motoréducteur reste compatible avec les dispositifs de commutation déjà existants ;
- Le nombre de pièces constituant l'ensemble motoréducteur est faible ;
- La roue dentée 20 est compatible avec les procédés de fabrication additive et avec le frittage conventionnel ;
- Le boîtier 16 du réducteur 6 est dépourvu d'appuis additionnels pour la roue dentée 20 puisque celle-ci n'est pas amovible, ce qui simplifie la fabrication.

La présente divulgation ne se limite pas aux modes de réalisation décrits ci-avant, seulement à titre d'exemple, mais elle englobe toutes les variantes que pourra envisager l'homme de l'art dans le cadre de la protection recherchée.

## Revendications

1. Ensemble motoréducteur (2) pour la commutation motorisée d'un appareil de coupure d'un appareillage électrique moyenne ou haute tension, l'ensemble motoréducteur (2) comprenant un moteur (4) et un réducteur (6) en prise avec le moteur (4), le réducteur (6) comportant les éléments suivants :
a. une entrée (12) apte à recevoir une première force d'entraînement du moteur (4) ;
b. une sortie (14) apte à délivrer une deuxième force d'entraînement à un dispositif de commutation (24) d'appareil de coupure ;
c. une chaîne cinématique, reliant l'entrée (12) à la sortie (14) et apte à convertir la première force d'entraînement en la deuxième force d'entraînement, la chaîne cinématique comprenant les éléments suivants, situés à la sortie (14) du réducteur (6) :
- un entraîneur (18) apte à se déplacer entre une position fermée et une position ouverte pour ainsi entraîner le dispositif de commutation (24) ; et
- un actionneur (20) pour manœuvrer l'entraîneur (18) entre ses positions fermée et ouverte ;
d. un support (16a, 16b) portant la chaîne cinématique, l'actionneur (20) étant lié au support ; et
e. un élément de sécurité (22) dont fait partie l'entraîneur (18) et qui est retirable de la chaîne cinématique, l'élément de sécurité (22) pouvant être amené d'un état enfiché (EF), dans lequel il est intégré dans la chaîne cinématique, à un état retiré (ER), dans lequel la chaîne cinématique est interrompue,
**caractérisé en ce que**, lorsque l'élément de sécurité (22) est enfiché, son entraîneur (18) est en prise avec l'actionneur (20) lié au support (16a, 16b), et **en ce que**, lorsque l'élément de sécurité (22) est retiré, son entraîneur (18) est séparé de l'actionneur (20) lié au support.

2. Ensemble motoréducteur (2) selon la revendication 1, dans lequel l'actionneur (20) est une roue dentée, de préférence munie d'un secteur denté (40).

3. Ensemble motoréducteur (2) selon l'une quelconque des revendications précédentes, dans lequel l'entraîneur (18) se présente sous la forme d'une manivelle, de préférence avec un ergot excentré (48) relié à un moyeu central (50).

4. Ensemble motoréducteur (2) selon l'une quelconque des revendications précédentes, dans lequel l'entraîneur (18) et l'actionneur (20) sont chacun munis d'éléments de liaison complémentaires (46, 58) permettant leur mise en prise.

5. Ensemble motoréducteur (2) selon l'une quelconque des revendications précédentes, dans lequel le support (16a, 16b) comprend un axe (36) sur lequel est monté l'actionneur (20) de manière rotative.

6. Ensemble motoréducteur (2) selon la revendication 5, dans lequel l'entraîneur (18) est monté sur l'axe (36) du support, en prise avec l'actionneur (20), lorsque l'élément de sécurité (22) est enfiché.

7. Ensemble motoréducteur (2) selon l'une quelconque des revendications précédentes, dans lequel le support (16a, 16b) est un boîtier accueillant la chaîne cinématique.

8. Ensemble motoréducteur (2) selon l'une quelconque des revendications précédentes, dans lequel le support (16a, 16b) est muni d'un tenon (38) de raccordement de l'ensemble motoréducteur (2) à un dispositif de commutation (24) d'appareil de coupure.

9. Ensemble motoréducteur (2) selon la revendication 8 en combinaison avec la revendication 5, dans lequel le tenon de raccordement (38) se situe dans le prolongement de l'axe (36).

10. Ensemble motoréducteur (2) selon l'une quelconque des revendications 1 à 7, dans lequel le support (16a, 16b) est muni d'un trou (72) de raccordement de l'ensemble motoréducteur (2) à un dispositif de commutation (24) d'appareil de coupure.

11. Ensemble motoréducteur (2) selon la revendication 10 en combinaison avec la revendication 5, dans lequel le trou de raccordement (72) est aménagé au sein de l'axe (36).

12. Ensemble motoréducteur (2) selon l'une quelconque des revendications précédentes, dans lequel l'actionneur (20) est une pièce réalisée par fabrication additive ou par pressage et frittage.

13. Ensemble électromécanique comprenant un appareil de coupure, un dispositif (24) de commutation de l'appareil de coupure, et un ensemble motoréducteur (2) pour l'actionnement du dispositif de commutation (24), l'ensemble motoréducteur (2) étant un ensemble selon l'une quelconque des revendications précédentes.
